# DEMANDE DE BREVET EUROPEEN

(11) **EP 3 699 504 A1**
(43) Date de publication de la demande: **26.08.2020**
(21) Numéro de dépôt: 20159083.3
(22) Date de dépôt: 24.02.2020
(51) Int. Cl.: F24F 5/00, F24F 6/04

(54) **REFROIDISSEUR ADIABATIQUE**

(30) Priorité: 25.02.2019 FR 1901884
(71) Demandeur: C.T.A., 69630 Chaponost (FR)
(72) Inventeur: PEREZ, Adrien, 69005 Lyon (FR)
(74) Mandataire: Lavoix

(57) **Abrégé**

L'invention concerne un refroidisseur adiabatique (2), comprenant un panneau évaporant (4), un groupe moto-ventilateur (5) pour générer un flux d'air (F1, F2) à travers le panneau évaporant, un réservoir (6) pour stocker de l'eau, un diffuseur d'eau (8), pour humidifier le panneau évaporant, une pompe (10) pour alimenter le diffuseur à partir du réservoir, un stérilisateur d'eau par ultraviolets UV-C (34) qui est disposé entre le réservoir (6) et le diffuseur (8) et est équipé d'un détecteur de défaut pour couper la pompe (10) en cas de dysfonctionnement du stérilisateur (34), un filtre particulaire (32) disposé entre la pompe et le stérilisateur.

## Description

La présente invention concerne un refroidisseur adiabatique.

Le principe de base du refroidissement adiabatique est d'utiliser l'évaporation de l'eau pour refroidir le flux d'air au contact de l'eau. Un refroidisseur adiabatique peut être mieux connu sous le nom de climatiseur par évaporation ou de rafraichisseur d'air par évaporation.

Le refroidissement adiabatique est en fait un processus utilisé depuis des centaines d'années. Par exemple, les civilisations du Moyen-Orient pendaient des linges mouillés à l'entrée de leur tente et les Grecs disposaient des amphores remplies d'eau dans leurs couloirs. L'eau s'évapore naturellement au contact de l'air chaud, et absorbe donc une partie de la chaleur contenue dans l'air lors du changement de phase. Cela entraine alors le refroidissement de l'air. Le refroidissement par évaporation est d'autant plus efficace que le climat est chaud et sec.

Les refroidisseurs adiabatiques sont utilisés comme sources de rafraichissement ponctuel, majoritairement dans les bâtiments industriels, tels que les hangars, les entrepôts, les garages, les grandes surfaces, etc. Il faut comprendre que, dans la plupart des pays d'Europe, on a en réalité besoin de rafraichir les bâtiments industriels que quelques semaines par an, notamment lors des pics de chaleur en été. Ainsi, les industriels sont généralement réticents à investir dans un système de climatisation pour un besoin aussi réduit. C'est pourquoi la solution du refroidisseur adiabatique apparait souvent comme un bon compromis. En effet, les refroidisseurs adiabatiques sont adaptés aux grandes surfaces, de l'ordre de plusieurs centaines de mètres carrées, et sont généralement montés sur chariot roulant. Ils sont ainsi facilement déplaçables et peuvent être rangés lorsqu'il n'y a plus besoin de rafraichir l'atmosphère. De plus, les refroidisseurs adiabatiques sont simples d'utilisation : ils peuvent être branchés sur secteur et nécessitent simplement une prise d'alimentation en eau.

De manière connue en soi, un refroidisseur adiabatique se présente sous la forme d'un caisson, comprenant un gros ventilateur pour forcer l'air ambiant à passer à travers un panneau alvéolaire, que l'on peut également connaitre sous le nom de filtre ou média filtrant. Un diffuseur est agencé en partie haute du panneau. Ce diffuseur produit des gouttelettes d'eau qui ruissellent au sein du panneau alvéolaire, et ce dernier se retrouve alors imbibé d'eau.

Les refroidisseurs adiabatiques ont du mal à s'imposer sur le marché par rapport aux systèmes de climatisation classiques car l'eau utilisée doit être traitée ou changée à intervalle régulier pour éviter les maladies infectieuses, telles que la légionellose. La légionellose est une infection aigüe causée par une bactérie, la légionnelle. Les légionnelles sont des bactéries très répandues en milieu humide. Dans la nature, elles vivent dans les eaux douces (lacs, rivières, étangs, marais, etc.). Les légionnelles prolifèrent dans l'eau stagnante, lorsque la température de l'eau est comprise entre 25°C et 35°C. Elles peuvent être à l'origine de maladies chez l'homme lorsqu'elles sont inhalées sous forme de fines gouttelettes.

L'invention entend proposer un nouveau type de refroidisseur adiabatique, avec aucun risque de pollution de l'air froid produit par le refroidisseur.
A cet effet, l'invention concerne un refroidisseur adiabatique comprenant un panneau évaporant, un groupe moto-ventilateur pour générer un flux d'air à travers le panneau évaporant, un réservoir pour stocker de l'eau, un diffuseur d'eau, pour humidifier le panneau évaporant, une pompe pour alimenter le diffuseur à partir du réservoir et un stérilisateur d'eau par ultraviolets, disposé entre le réservoir et le diffuseur. En particulier, le stérilisateur d'eau par ultraviolets est équipé d'un détecteur de défaut pour couper la pompe en cas de dysfonctionnement du stérilisateur.

Grâce à l'invention, il n'y a pas de risque de contamination par l'eau pulvérisée par l'appareil car cette dernière est traitée aux UV-C. En effet, la longueur d'onde spécifique des UV-C (100 - 280 nm) permet la neutralisation de la plupart des bactéries (dont la légionnelle) en agissant directement sur leur ADN. Les bactéries deviennent ainsi inoffensives et incapables de se reproduire. On n'a donc pas besoin de changer l'eau du réservoir avant chaque utilisation, même si l'appareil n'a pas été utilisé depuis longtemps et/ou si la température dépasse 25°C. L'avantage est donc que l'appareil est fiable, du moins pour ce qui concerne notre santé.

US 4 312 819 A, US 3 116 612 A et US 2010/281896 A1 divulguent des exemples de refroidisseur adiabatique. Toutefois, aucun d'entre eux ne comprend de lampe UV-C.

US 2017/225984 A1 décrit une fontaine qui utilise de l'eau pour former un film liquide le long d'un rideau. La fontaine comporte un purificateur d'air comprenant un tube perforé. Une bague de distribution d'eau est située au sommet du tube et un bassin collecteur est situé au niveau du fond pour recueillir l'eau qui coule le long du tube perforé. Une pompe et un système de circulation sont fournis afin de faire circuler l'eau du bassin collecteur vers la bague de distribution, et un ventilateur dirige de l'air à travers les trous du tube. Des lampes à ultraviolets projettent une lumière ultraviolette pour tuer les substances indésirables dans l'eau, par exemple des bactéries ou des virus.

Selon des aspects avantageux, mais non obligatoires, le refroidisseur adiabatique selon l'invention peut comprendre une ou plusieurs des caractéristiques suivantes, prises dans toute combinaison techniquement admissible :
- Le refroidisseur adiabatique comprend en outre un filtre particulaire en amont du stérilisateur.
- Le refroidisseur adiabatique comprend en outre un système de refroidissement pour refroidir l'eau du réservoir. Ainsi, en refroidissant l'eau, on augmente le pouvoir rafraichissant de l'appareil, si bien que ce dernier s'avère efficace même dans les milieux très chauds, comme les hangars sous verrières, les garages automobiles, les fonderies, etc.
- Le système de refroidissement comprend un circuit fermé, une pompe pour faire circuler l'eau à l'intérieur du circuit et un échangeur de chaleur.
- L'échangeur de chaleur est un échangeur eau-gaz, délimitant un tronçon du circuit fermé et un tronçon d'un circuit de fluide réfrigérant, comme du fréon ou du propane.
- Le système de refroidissement comprend un thermostat pour maintenir la température de l'eau entre une valeur minimale et une valeur maximale.
- La valeur minimale est de 7°C.
- La valeur maximale est comprise entre 10°C et 12°C.
- Le refroidisseur adiabatique comprend des moyens de branchement au réseau électrique, un minuteur, qui se déclenche automatiquement lorsque le refroidisseur passe d'un état alimenté en énergie électrique à un état non-alimenté en énergie électrique et qui est réinitialisé lorsque le refroidisseur passe de l'état non-alimenté en énergie électrique à l'état alimenté en énergie électrique, et un mécanisme pour vidanger automatiquement le réservoir lorsque le temps mesuré par le minuteur atteint un certain seuil.
- Ce certain seuil est de 3 heures.
- Le mécanisme comprend une électrovanne et un automate de contrôle de l'électrovanne, alimenté de façon autonome par batterie.
- Le groupe moto-ventilateur a une vitesse de rotation réglable.
- Le refroidisseur comprend des roues lui permettant de se déplacer sur la surface du sol et des freins mécaniques pour le maintenir immobile, ou en position, en cours d'utilisation.
- Le panneau évaporant comprend des feuilles de cellulose ondulées.
- Le panneau évaporant est un panneau alvéolaire cellulosique.
- Le panneau évaporant possède en partie extérieure un revêtement de colle noire le rendant moins sensible aux chocs et facilitant son nettoyage.
- La pompe est une pompe immergée.
- La pompe comprend un flotteur qui commande l'arrêt de la pompe lorsque le niveau du réservoir descend en dessous d'un certain seuil.
- Le refroidisseur comprend une sonde hygrométrique qui permet d'arrêter la pulvérisation d'eau si l'humidité ambiante devient trop élevée.
- Le refroidisseur adiabatique comprend en outre un filtre particulaire en amont du stérilisateur pour limiter son encrassement.
- Le refroidisseur comprend un pressostat en amont du filtre particulaire qui permet de détecter un défaut de pompe ou un colmatage du filtre.
- Le refroidisseur comprend un robinet de purge permettant à l'utilisateur de commander manuellement la vidange du réservoir.
- Le réservoir est en plastique ou en acier inoxydable.
- Le réservoir possède un capteur de niveau d'eau et une jauge analogique qui donne une information visuelle du niveau d'eau restant.
- Le réservoir sera recouvert pour limiter toute pollution extérieure lorsque l'appareil ne fonctionne pas.
- Le refroidisseur comprend un automate qui effectue une temporisation pour permettre à la lampe UV-C d'atteindre sa température d'utilisation avant de démarrer la pompe.
- L'automate effectue une temporisation pour permettre au ventilateur de sécher le média évaporant après l'arrêt de la pompe, volontaire ou non.

L'invention et d'autres avantages de celle-ci apparaitront plus clairement à la lumière de la description qui va suivre d'un mode de réalisation d'un refroidisseur adiabatique conforme à l'invention. Cette description est donnée uniquement à titre d'exemple et faite en référence aux dessins annexés dans lesquels :
[Fig 1] La figure 1 est un schéma de principe du refroidisseur adiabatique objet de l'invention,
[Fig 2] La figure 2 est une vue schématique et de côté du refroidisseur selon l'invention,
[Fig 3] La figure 3 est un schéma illustrant le pilotage d'une électrovanne du refroidisseur, et
[Fig 4] La figure 4 est une autre vue schématique et de côté du refroidisseur selon l'invention.

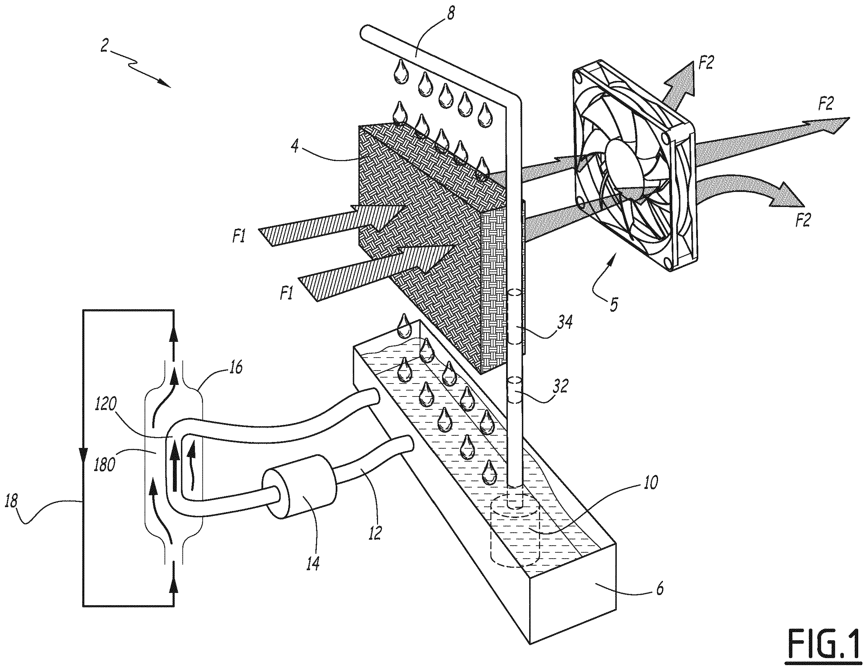

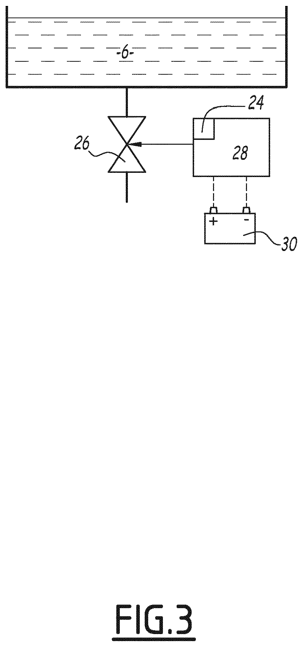

Les figures 1 à 4 montrent chacune tout ou partie d'un refroidisseur adiabatique 2 selon l'invention. Un refroidisseur adiabatique est un dispositif utilisant l'évaporation de l'eau pour refroidir un flux d'air circulant au contact de l'eau. Un tel dispositif peut également porter la dénomination de climatiseur par évaporation ou de rafraichisseur d'air par évaporation.

Le refroidisseur adiabatique 2 comprend un panneau 4, qui est qualifié de panneau évaporant car l'eau qu'il absorbe s'évapore au contact de l'air, tout particulièrement lorsque l'on crée un flux d'air perpendiculaire au panneau. Dans l'exemple, le panneau évaporant 4 est un panneau alvéolaire cellulosique, c'est-à-dire un panneau comprenant des alvéoles avec des parois en fibres végétales, lesquelles ont une certaine capacité à absorber l'humidité.

Typiquement, le panneau 4 peut présenter une structure en nid d'abeilles.

En variante, le panneau peut aussi être formée d'une pluralité de feuilles de cellulose ondulées, accolées les unes aux autres. Dans ce cas, les feuilles s'étendent parallèlement les unes aux autres, notamment dans le sens de la hauteur lorsque le refroidisseur adiabatique 2 est dans sa configuration d'utilisation normale.

De préférence, le panneau évaporant 4 comprend, en partie extérieure, un revêtement de colle noire le rendant moins sensible aux chocs et facilitant son nettoyage.

Le refroidisseur adiabatique 2 comprend également un groupe moto-ventilateur 5 pour générer un flux d'air à travers le panneau évaporant 4. Ce groupe moto-ventilateur 5 comprend un ventilateur et un moteur électrique d'entrainement du ventilateur. De préférence, le groupe moto-ventilateur 5 a une vitesse de rotation réglable, ce qui permet de régler le débit d'air traversant le panneau évaporant 4. Typiquement, on retrouve un bouton sur le côté de l'appareil, dans l'exemple de type potentiomètre, qui permet à l'utilisateur de régler la vitesse de rotation du ventilateur en tournant plus ou moins le bouton.

Le refroidisseur adiabatique 2 comprend également un réservoir 6 pour stocker de l'eau et un diffuseur d'eau 8, pour humidifier le panneau évaporant 4.

Dans l'exemple, le réservoir 6 est fabriqué en plastique, de façon à éviter les problèmes de corrosion et la contamination de l'eau contenue dans le réservoir 6. Toutefois, on pourrait utiliser un matériau différent, notamment un métal noble qui résiste à la corrosion et à l'oxydation, tel que l'Acier inoxydable.

Le réservoir 6 comprend avantageusement un témoin de niveau (non représenté) permettant à l'utilisateur de visualiser le niveau de l'eau à l'intérieur du réservoir 6. Par exemple, ce témoin de niveau est une jauge analogique qui donne à l'utilisateur une information visuelle du niveau d'eau restant. Précisément, le niveau d'eau restant est mesuré par un capteur de niveau et transmis à la jauge. Le capteur de niveau est connu en soi, c'est pourquoi il n'est pas décrit plus avant.

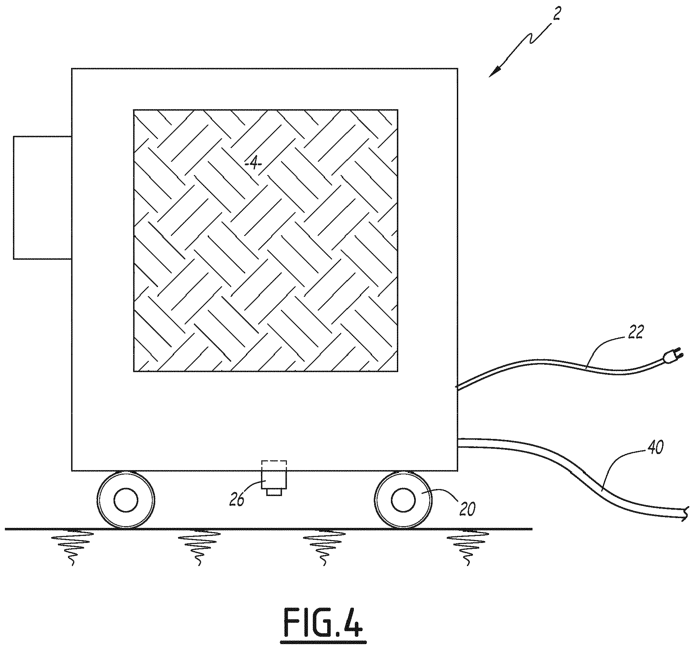

Le réservoir 6 peut être alimenté directement en eau courante au moyen d'un tuyau d'alimentation d'eau 40 visible uniquement à la figure 4.

Aussi, le réservoir 6 comprend avantageusement un couvercle de protection (non représenté) pour limiter toute pollution extérieure lorsque l'appareil 2 ne fonctionne pas. Plus précisément, le couvercle est amovible : il est positionné au dessus du réservoir 6 lorsque l'appareil est à l'arrêt et retiré avant la mise en marche de l'appareil.

Une pompe 10 permet d'alimenter le diffuseur 8 à partir du réservoir 6. De préférence, la pompe 10 est une pompe immergée.

La pompe 10 comprend de préférence un flotteur (non représenté) qui commande l'arrêt de la pompe lorsque le niveau du réservoir 6 descend en dessous d'un certain seuil, c'est-à-dire est au plus bas. Il peut s'agir d'un flotteur de type filaire ou à bras. Dans le cas d'un flotteur filaire, il s'agit d'un petit boîtier qui est relié au moteur de la pompe 10 par un câble électrique étanche. Ce flotteur intègre un interrupteur à gravité qui fonctionne de la façon suivante : Quand il n'y a plus assez d'eau, le flotteur repose au fond du réservoir en position horizontale, ou couchée (de par sa forme), ce qui ouvre un circuit électrique et arrête le moteur de la pompe.

Selon un autre aspect avantageux, le flotteur commande également aussi le démarrage de la pompe 10 (sous réserve que celle-ci soit branchée sur secteur évidemment), et ce de la façon suivante: lorsque l'eau à l'intérieur du réservoir 6 est haute, le flotteur est porté à la surface en position verticale, ce qui ferme le circuit électrique et met en marche le moteur de la pompe 10.

Dans le cas d'un flotteur à bras, ce dernier monte ou descend en fonction du niveau de l'eau, ce qui actionne un bras de commande, lequel agit mécaniquement sur un interrupteur interne pour ouvrir ou fermer le circuit d'alimentation de la pompe 10.

L'appareil 2 comprend avantageusement un hygromètre (non représenté), grâce auquel la pompe 10 est automatiquement coupée en cas d'hygrométrie extérieure excessive. Cet hygromètre prend la forme d'une sonde, qu'on appelle couramment sonde hygrométrique, qui transmet en permanence le taux d'humidité de l'air ambient à un automate, c'est-à-dire à un boitier électronique de commande. Lorsque ce taux d'humidité est supérieur à un certain seuil, par exemple de l'ordre de 75 %, l'automate commande l'arrêt du groupe moto-ventilateur 5. Cela permet astucieusement de ne pas surcharger l'air ambient en humidité, pour ne pas que cela devienne irrespirable. En parallèle, l'automate peut commander aussi l'arrêt de la pompe 10.

Dans l'exemple, le diffuseur d'eau 8 est disposé en partie haute au-dessus du panneau évaporant 4. Il s'agit d'une barre qui s'étend sur toute la largeur du panneau évaporant 4 et qui comprend une pluralité de buses d'aspersion, par exemple réparties de manière régulière le long de la barre. Des gouttes d'eau sont aspergées à travers les buses directement sur les parois du panneau évaporant 4. Notamment, les gouttes d'eau ruissellent par gravité le long des parois du panneau 4, jusqu'à retourner dans le réservoir 6 puisque celui-ci est positionné en dessous du panneau 4. Les parois du panneau évaporant 4 absorbent une partie de l'eau s'écoulant à partir du diffuseur 8.

Le principe de fonctionnement du refroidisseur adiabatique 2 est maintenant détaillé en référence à la figure 1. Sur cette figure, les flèches F1 représentent le flux d'air chaud en entrée de l'appareil et les flèches F2 représentent le flux d'air froid en sortie de l'appareil. L'air chaud, en traversant les alvéoles du panneau évaporant 4, se refroidit au contact de l'eau ruisselant le long des parois du panneau 4. Effectivement, l'eau absorbe une partie de la chaleur de l'air, que l'on appelle chaleur latente de vaporisation, et s'évapore naturellement.

Pour rappel, les légionnelles sont des bactéries qui prolifèrent dans l'eau stagnante, lorsque la température de l'eau est comprise entre 25°C et 35°C. Elles peuvent être à l'origine de maladies chez l'homme lorsqu'elles sont inhalées sous forme de fines gouttelettes.

Or, le refroidisseur adiabatique 2 est un appareil qui est destiné à fonctionner uniquement le jour, en présence des occupants du bâtiment dans lequel il est installé. Or, dans les pays chauds, il n'est pas rare que la température la nuit ne descende pas en dessous de 25°C. Ainsi, il y a un risque de prolifération des bactéries telles que les légionnelles la nuit et il devient nécessaire, pour la santé des occupants, de changer l'eau du réservoir chaque matin. Cela est d'une part très contraignant et d'autre part pas très économique.

Pour remédier à ces inconvénients, le refroidisseur adiabatique 2 comprend en outre un stérilisateur d'eau par ultraviolets 34 (ou « réacteur UV-C »), notamment par UV-C, disposé entre le réservoir 6 et le diffuseur 8. Un tel réacteur UV-C est disponible dans le commerce, pour d'autres applications, c'est pourquoi il n'est pas décrit plus avant. Ce stérilisateur 34 est en fait une lampe qui émet des rayonnements ultraviolets, du type UV-C, à l'intérieur d'une gaine en quartz (non représentée). Le réacteur est monté entre la pompe 10 et le diffuseur 8, l'eau traverse complètement le réacteur et entre en contact avec les UV-C au travers de la gaine en quartz. Ces rayonnements ont pour effet de neutraliser la majorité (sinon toutes) les bactéries présentes dans l'eau, en particulier les légionnelles, en affectant leur ADN, les rendant inertes.

De préférence, le réacteur, ou stérilisateur UV-C comprend des moyens de détection de défaut pour couper la pompe 10 en cas de dysfonctionnement de la lampe UV, c'est-à-dire du réacteur 34. Le réacteur 34 intègre donc une fonction d'autodiagnostic et est capable d'informer l'automate de contrôle de l'appareil lors de l'apparition d'un défaut. L'automate peut, en réaction, couper automatiquement la pompe 10 afin d'éviter de pulvériser de l'eau non-stérilisée. Aussi, un message d'alerte peut être envoyé à l'utilisateur pour l'informer de la présence d'un dysfonctionnement au niveau de la lampe UV.

En option, l'automate de contrôle du refroidisseur 2 est programmé pour déclencher la mise en marche de la pompe 10 après celle de la lampe UV-C, c'est à dire pour temporiser le déclenchement de la pompe 10, de façon à ce que la lampe UV-C 34 puisse atteindre sa température d'utilisation avant que la pompe soit enclenchée.

Egalement en option, l'automate peut être programmé pour temporiser, c'est-à-dire pour différer l'arrêt du groupe moto-ventilateur 5 par rapport à celui de la pompe 10. Cela permet au ventilateur 5 de sécher le média évaporant du panneau 4 après l'arrêt de la pompe, qu'il soit volontaire ou non.

Dans l'exemple, un tronçon ou l'intégralité du tuyau acheminant l'eau à partir de la pompe 10 et jusqu'au diffuseur 8, est transparent (ou au moins translucide) de façon à ce que les rayons UV émis par la lampe puissent pénétrer dans l'eau. En variante, la lampe UV est un boitier indépendant, raccordée entre deux bouts de tuyaux, respectivement à un premier tuyau s'étendant entre la pompe 10 et la lampe 34 et à un second tuyau s'étendant entre la lampe 34 et le diffuseur 8.

Avantageusement, un filtre à particules (ou filtre particulaire) 32 est agencé en amont de la lampe UV-C 34. Dans l'exemple, ce filtre à particules retient les particules dans l'eau dont la taille est approximativement supérieure à 10 microns. Ce filtre à particules 32 permet de limiter l'encrassement du réacteur UV-C positionné en aval.

De préférence, l'appareil, c'est-à-dire le refroidisseur adiabatique 2 comprend un pressostat (non représenté) qui est intégré au filtre particulaire 32. Le pressostat mesure alors la pression en amont, correspondant à la pression de sortie de la pompe 10 et la pression en aval. En comparant la pression en amont avec la pression en aval, on peut se rendre compte d'un encrassement éventuel du filtre 32. Typiquement, le filtre est encrassé, ou colmaté, lorsque la pression en aval est très inférieure à la pression en amont. Aussi, en comparant la pression de sortie de la pompe avec la pression nominale, c'est-à-dire la pression qu'est censée fournir la pompe en conditions normale, on peut détecter un défaut, ou dysfonctionnement de la pompe 10. Eventuellement, le pressostat comprend des moyens pour transmettre l'information à l'automate de contrôle de l'appareil. L'automate peut, à son tour, alerter l'utilisateur en émettant un signal d'alarme (visuel, sonore, etc.).

En variante, deux pressostats peuvent être disposés respectivement en amont et en aval du filtre particulaire et assurer la même fonction.

Par ailleurs, le gradient de température entre le flux d'air entrant F1 et le flux d'air sortant F2 est d'autant plus élevé que la température de l'eau est basse. Or, on ne maitrise pas vraiment la température de l'eau courante (ou eau du robinet), c'est pourquoi le refroidisseur adiabatique 2 comprend avantageusement un système de refroidissement pour refroidir l'eau du réservoir 6. Ce système de refroidissement est toutefois optionnel.

Dans l'exemple, ce système comprend un circuit fermé 12, une pompe 14 pour faire circuler l'eau à l'intérieur du circuit 12 et un échangeur de chaleur 16. Néanmoins, tout autre système de refroidissement pourrait être utilisé. Typiquement, on pourrait imaginer une machine à fabriquer des glaçons, lesquels seraient alors versés automatiquement, avec une certaine quantité en fonction des besoins de refroidissement, dans le réservoir 6.

De préférence, l'échangeur de chaleur 16 est un échangeur eau-gaz, délimitant un tronçon 120 du circuit fermé 12 et un tronçon 180 d'un circuit de fluide réfrigérant 18. Ici, le tronçon 120 est représenté droit, mais on peut, en variante, imaginer un tronçon 120 en serpentin. Un compresseur (non représenté) peut être utilisé pour faire circuler le fluide réfrigérant dans le circuit 18.

N'importe quel fluide réfrigérant peut être utilisé. Ici, le fluide réfrigérant est de préférence un gaz, notamment du fréon ou du propane. De plus, l'échangeur de chaleur 16 peut être du type co-courants ou à contre-courant.

Sur les figures, l'échangeur de chaleur 16 est représenté comme un échangeur bouteille. Le volume interne de la bouteille forme le tronçon 180, tandis que le tube traversant la bouteille constitue le tronçon 120. Toutefois, l'invention ne se limite bien entendu pas à ce mode de réalisation. En effet, l'échangeur de chaleur 16 pourrait également être un échangeur multitubulaire, coaxial, ou encore à plaques.

Avantageusement, le système de refroidissement comprend un thermostat (non représenté) pour maintenir la température de l'eau entre une valeur minimale et une valeur maximale. Typiquement, la valeur minimale est choisie de façon à éviter que l'eau gèle à l'intérieur des canalisations. Elle est en pratique de l'ordre de 7°C. La valeur maximale doit être inférieure à 25°C, puisque c'est à cette température que les bactéries, telles que les légionnelles, sont susceptibles de se développer. Par exemple, la valeur maximale peut être de 10 ou 12°C.

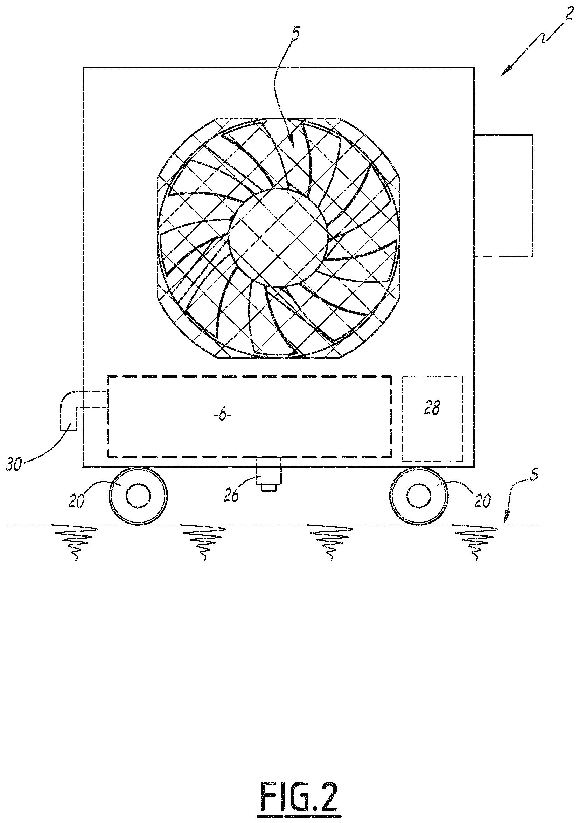

Comme visible sur les figures 2 et 4, le refroidisseur adiabatique 2 comprend des roues 20 lui permettant de se déplacer sur la surface du sol S, c'est pourquoi le refroidisseur 2 prend la forme d'un chariot.

Avantageusement, les roues sont pivotantes pour faciliter la manipulation de l'appareil. Cela est particulièrement pratique puisque le refroidisseur peut être déplacé et rangé facilement lorsqu'il n'y a plus besoin.

Deux des roues sont de préférence équipées de freins mécaniques pour sécuriser, c'est-à-dire immobiliser l'appareil lors de sa mise en service. Effectivement, il ne faut pas oublier que ce type d'appareil est destiné à fournir une source de froid pendant les pics de chaleur uniquement, c'est-à-dire pendant quelques semaines par an au plus. Il est donc intéressant de pouvoir le déplacer et le ranger facilement.

Par ailleurs, le refroidisseur adiabatique 2 comprend avantageusement des moyens de branchement au réseau électrique, notamment un câble de branchement 22. Ce câble 22 est un câble standard pour se brancher sur du courant alternatif en 220/230 V, et notamment sur les prises d'électricité murales. En variante, on pourrait imaginer alimenter le refroidisseur adiabatique 2 autrement, par exemple avec une batterie ou un groupe électrogène.

Avantageusement, un robinet 30, manuel, peut être ouvert par l'utilisateur pour commander la vidange du réservoir 6. De préférence, ce robinet 30 fonctionne uniquement lorsque la pompe 10 tourne. Cela signifie que, lorsque le robinet 30 est ouvert, la pompe 10 pompe l'eau du réservoir 6 non pas vers le diffuseur 8 mais directement vers la sortie d'évacuation équipée du robinet 30.

Optionnellement, un minuteur 24 (ou « timer » en Anglais) se déclenche automatiquement lorsque le refroidisseur 2 passe d'un état alimenté en énergie électrique à un état non-alimenté en énergie électrique. Ce minuteur 24 est réinitialisé lorsque le refroidisseur 2 passe de l'état non-alimenté en énergie électrique à l'état alimenté en énergie électrique. En pratique, le passage de l'état alimenté à l'état non-alimenté intervient lorsque le câble électrique 22 est débranché ou en cas de panne électrique et le passage de l'état non-alimenté à l'état alimenté intervient lorsque le câble électrique 22 est rebranché ou en cas de rétablissement du réseau. Le refroidisseur 2 comprend par ailleurs un mécanisme pour vidanger automatiquement le réservoir 6 lorsque le temps mesuré par le minuteur atteint un certain seuil.

On sait que l'eau ne doit pas stagner plusieurs heures pour éviter la prolifération de bactéries, telles que les légionnelles. Le seuil est donc défini dans l'exemple à 3 heures. Cela signifie que, 3 heures après que l'alimentation du refroidisseur 2 en électricité ait été coupée, le réservoir 6 est automatiquement vidé. Pour utiliser à nouveau le refroidisseur, il convient alors de remplir à nouveau le réservoir 6 avec de l'eau saine, par exemple avec de l'eau courante, ou eau du robinet. On s'assure ainsi que, lors d'une utilisation ultérieure, le refroidisseur 2 ne fonctionnera pas avec de l'eau polluée, par exemple avec de l'eau chargée en bactéries.

Le mécanisme utilisé pour la vidange comprend une vanne 26, que l'on pourrait appeler vanne de purge automatique. Cette vanne 26 peut être raccordée via un tuyau d'évacuation vers le tout-à-l'égout ou tout autre conduit d'évacuation des eaux usées. En variante, on pourra disposer un bac en dessous de la vanne 26 pour récupérer les eaux usées et éviter de déverser le contenu du réservoir 6 au sol.

Lorsque le refroidisseur 2 est posé sur la surface du sol, la vanne 26 est surélevée par rapport au sol de façon, d'une part, à pouvoir positionner un bac de récupération de l'eau usée en dessous du refroidisseur 2 et, d'autre part, à ne pas gêner le positionnement du refroidisseur 2 sur une palette de transport industriel (non représentée).

Dans l'exemple, la vanne 26 est une électrovanne, c'est-à-dire une vanne à commande électrique. Le mécanisme utilisé pour la vidange comprend donc l'électrovanne 26 et un automate 28 de contrôle de l'électrovanne, alimenté de façon autonome par une batterie 30.

Ainsi, l'ouverture de la vanne 26 peut être commandée même lorsque le refroidisseur adiabatique 2 est débranché du réseau électrique. Par exemple, dans un garage, si le garagiste coupe l'électricité à la fin de la journée et ne rebranche l'appareil que le lendemain, alors le réservoir 6 est automatiquement vidé pendant la nuit. Il convient alors de changer l'eau le matin. On s'assure ainsi que le refroidisseur adiabatique ne fonctionne pas avec de l'eau qui a stagné pendant plus de trois heures à température ambiante, laquelle peut dépasser les 35°C en été.

Les caractéristiques du mode de réalisation et des différentes variantes envisagées peuvent être combinées entre elles pour générer des modes de réalisation alternatifs de l'invention.

## Revendications

1. Refroidisseur adiabatique (2), comprenant :
un panneau évaporant (4),
un groupe moto-ventilateur (5) pour générer un flux d'air (F1, F2) à travers le panneau évaporant,
un réservoir (6) pour stocker de l'eau,
un diffuseur d'eau (8), pour humidifier le panneau évaporant,
une pompe (10) pour alimenter le diffuseur à partir du réservoir, et
un stérilisateur (34) d'eau par ultraviolets, disposé entre le réservoir (6) et le diffuseur (8), **caractérisé en ce que** le stérilisateur (34) est équipé d'un détecteur de défaut pour couper la pompe (10) en cas de dysfonctionnement du stérilisateur.

2. Refroidisseur adiabatique selon la revendication 1, comprenant en outre un filtre particulaire (32) en amont du stérilisateur.

3. Refroidisseur adiabatique selon la revendication 1 ou 2, comprenant en outre un système de refroidissement (12, 14, 16) pour refroidir l'eau du réservoir (6).

4. Refroidisseur adiabatique selon la revendication 3, dans lequel le système de refroidissement comprend un circuit fermé (12), une pompe (14) pour faire circuler l'eau à l'intérieur du circuit et un échangeur de chaleur (16).

5. Refroidisseur adiabatique selon la revendication 4, dans lequel l'échangeur de chaleur (16) est un échangeur eau-gaz, délimitant un tronçon du circuit fermé et un tronçon d'un circuit de fluide réfrigérant, comme du fréon ou du propane.

6. Refroidisseur adiabatique selon l'une des revendications 3 à 5, dans lequel le système de refroidissement comprend un thermostat pour maintenir la température de l'eau entre une valeur minimale et une valeur maximale.

7. Refroidisseur adiabatique selon l'une des revendications précédentes, comprenant :
des moyens (22) de branchement au réseau électrique,
un minuteur (24), qui se déclenche automatiquement lorsque le refroidisseur passe d'un état alimenté en énergie électrique à un état non-alimenté en énergie électrique et qui est réinitialisé lorsque le refroidisseur passe de l'état non-alimenté en énergie électrique à l'état alimenté en énergie électrique, et
un mécanisme (26, 28) pour vidanger automatiquement le réservoir lorsque le temps mesuré par le minuteur atteint un certain seuil.

8. Refroidisseur adiabatique selon la revendication précédente, dans lequel le mécanisme comprend une électrovanne (26) et un automate (28) de contrôle de l'électrovanne, alimenté de façon autonome par batterie (30).

9. Refroidisseur adiabatique selon l'une des revendications précédentes, dans lequel le stérilisateur par ultraviolets est un réacteur UV-C.

10. Refroidisseur adiabatique selon l'une des revendications précédentes, dans lequel le réservoir (6) est en plastique ou en acier inoxydable.

11. Refroidisseur adiabatique selon l'une des revendications précédentes, comprenant des roulettes pivotantes (20) qui sont équipées d'un frein mécanique pour sécuriser le refroidisseur en fonctionnement.

12. Refroidisseur adiabatique selon l'une des revendications précédentes, dans lequel la pompe (10) est équipée d'un flotteur déporté permettant l'arrêt de la pompe en cas de réservoir vide.

13. Refroidisseur adiabatique selon la revendication 2, dans lequel le filtre particulaire (32) est équipé d'un pressostat.

14. Refroidisseur adiabatique selon l'une des revendications précédentes, dans lequel le refroidisseur comprend un automate lui permettant de fonctionner de façon autonome.

15. Refroidisseur adiabatique selon l'une des revendications précédentes, comprenant un hygromètre permettant de mesurer l'humidité ambiante.
